# FASCICULE DE BREVET EUROPEEN

(11) **EP 1 125 457 B1**
(45) Date de publication et mention de la délivrance du brevet: **01.03.2006**
(21) Numéro de dépôt: 99943010.1
(22) Date de dépôt: 21.09.1999
(51) Int. Cl.: H04Q 7/38

(54) **PROCEDE ET SYSTEME DE GESTION DU RISQUE DANS UN RESEAU DE TELEPHONIE MOBILE**
VERFAHREN UND SYSTEM ZUR RISIKOVERWALTUNG IN EINEM MOBILEN NETZWERK
METHOD AND SYSTEM FOR MANAGING RISK IN A MOBILE TELEPHONE NETWORK

(30) Priorité: 27.10.1998 FR 9813440
(43) Date de publication de la demande: 22.08.2001
(73) Titulaire: GEMPLUS, 13881 Gémenos Cedex (FR)
(72) Inventeur: LE GALL, Jean, Pierre, F-13790 Rousset (FR); CHEW, Gary, F-13008 Marseille (FR)
(86) Numéro de dépôt international: PCT/FR1999/002233
(87) Numéro de publication internationale: WO 2000/025546

(56) Documents cités:
- WO-A-98/41050
- US-A- 5 748 720

## Description

L'invention concerne les réseaux de téléphonie mobile et, plus particulièrement dans de tels réseaux, un procédé et un système pour gérer le risque encouru par l'opérateur du réseau de téléphonie mobile en présence d'usagers susceptibles d'outrepasser leurs droits ou d'opérations anormales.

Un système de téléphonie mobile du type GSM (acronyme de l'expression anglo-saxonne Group Special Mobile), comprend un réseau de téléphonie mobile, géré par un opérateur, qui permet de connecter entre eux des usagers munis chacun d'un combiné mobile ME (acronyme de l'expression anglo-saxonne "Mobile Equipment"), chaque combiné comprenant notamment une carte à puce électronique SIM (acronyme de l'expression anglo-saxonne "Subscriber Identification Module").

Dans un tel système de téléphonie mobile, il est prévu un certain nombre d'opérations pour authentifier la carte SIM par le réseau, au moment de la mise en marche du combiné, ainsi qu'à tout autre moment de la communication téléphonique.

A cet effet, le procédé d'authentification comprend les étapes suivantes consistant à :
(1) remettre à zéro la carte par le combiné ou appareil mobile ME et transmettre l'identité de la carte SIM au réseau,
(2) obtenir du réseau un nombre aléatoire NA à la demande du combiné ME,
(3) transmettre le nombre aléatoire NA à la carte SIM par le combiné ME,
(4) calculer dans la carte SIM un premier certificat cryptographique CC1 ou cryptrogramme selon un algorithme prédéfini AL, à partir du nombre aléatoire NA fourni par le réseau et d'une clé secrète CS interne à la carte SIM,
(5) transmettre au réseau, via le combiné ME, le premier certificat cryptographique CC1 calculé par la carte SIM,
(6) calculer un deuxième certificat cryptographique CC2 par le réseau selon le même algorithme AL que celui de la carte SIM, à partir du nombre aléatoire NA envoyé à la carte SIM et de la clé interne secrète CS qui est connue du réseau par l'identité de la carte SIM,
(7) comparer le deuxième certificat cryptographique CC2 au premier certificat cryptographique CC1 et,
(8) autoriser la transaction si la comparaison est positive ou l'interdire dans le cas contraire.

Un tel procédé d'authentification permet de vérifier que le porteur du combiné ME auquel la carte SIM est associée est bien autorisé à entrer en communication par l'intermédiaire du réseau. Cependant, ce procédé ne permet pas de prendre en compte d'autres conditions qui seraient à remplir pour autoriser une entrée en communication. L'une des conditions supplémentaires à remplir pourrait être, dans le cas d'une carte à prépaiement, que le montant restant au crédit du porteur du combiné soit supérieur à un certain seuil prédéterminé, cette condition tendant à limiter le risque d'un défaut de paiement éventuel.

Par ailleurs, les procédés d'authentification mis en oeuvre actuellement ne permettent pas de détecter des demandes d'accès répétées d'un fraudeur à l'aide d'un combiné volé et, a fortiori, de bloquer cet accès après un certain nombre de demandes d'accès.

Un but de la présente invention est donc, de mettre en oeuvre un procédé d'authentification d'une carte d'abonné à un réseau de télécommunications qui permet de prendre en compte différentes conditions, éventuellement évolutives, de manière à gérer ou limiter les risques encourus par l'opérateur en autorisant l'accès au réseau.

Ce but est atteint en introduisant des moyens dans la carte SIM du combiné et dans le serveur du réseau ; ces moyens communiquent entre eux par des messages transmis sur une voie de télécommunication de service telle que celle utilisée actuellement pour le service des Messages Courts, plus connu sous l'acronyme anglo-saxon SMS pour "Short Message Service".

L'invention concerne donc un système de gestion du risque dans un réseau de téléphonie mobile équipé d'un dispositif de service de messages, les combinés mobiles comportant chacun une carte à puce électronique SIM capable de calculer un certificat cryptographique d'authentification à partir d'une valeur fournie par le réseau, caractérisé :
- en ce que la carte à puce électronique comprend des moyens pour autoriser ou non le calcul d'un certificat cryptographique et sa transmission au réseau lorsque certaines conditions sont remplies ou non et pour transmettre au réseau un message de demande d'évaluation du risque lorsque d'autres conditions sont remplies, et
- en ce que le réseau comprend des moyens pour évaluer ledit risque en fonction des informations contenues dans le message de demande d'évaluation du risque et de paramètres spécifiques à l'utilisateur du combiné mobile et pour envoyer un message auxdits moyens de la carte à puce électronique pour autoriser ou non le calcul et la transmission du certificat cryptographique.

L'invention concerne également un procédé pour mettre en oeuvre le système de gestion du risque défini ci-dessus, caractérisé en ce qu'il comprend, dans la carte à puce électronique, les étapes suivantes consistant à :
(a) vérifier l'état bloqué ou non de la carte à puce électronique pour refuser ou non la demande d'authentification ;
(b) dans le cas d'autorisation de la demande d'authentification, compter le nombre N de demandes d'authentification de la carte à puce électronique par le réseau,
(c) comparer le nombre N de demandes d'authentification à un premier seuil T0,
(d) calculer un certificat cryptographique si N < T0 et le transmettre au réseau,
(e) comparer le nombre N à un deuxième seuil T1 si N ≥ T0,
(f) mettre la carte à puce électronique à l'état bloqué si N ≥ T1, et
(g) calculer un certificat cryptographique et élaborer un message de demande d'évaluation du risque et les transmettre au réseau si T0 < N ≤ T1.

Le procédé ci-dessus est caractérisé en ce que, dans le réseau, il comprend les étapes supplémentaires suivantes consistant à :
(h) analyser le message de demande d'évaluation du risque transmis par la carte à puce électronique,
(i) évaluer le risque en fonction des résultats de l'analyse selon l'étape précédente (h) et de paramètres spécifiques à l'utilisateur du combiné mobile, et
(j) élaborer un message de réponse et le transmettre à la carte à puce électronique.

D'autres caractéristiques et avantages de la présente invention apparaîtront à lecture de la description suivante d'un exemple particulier de réalisation, ladite description étant faite en relation avec les dessins joints dans lesquels :

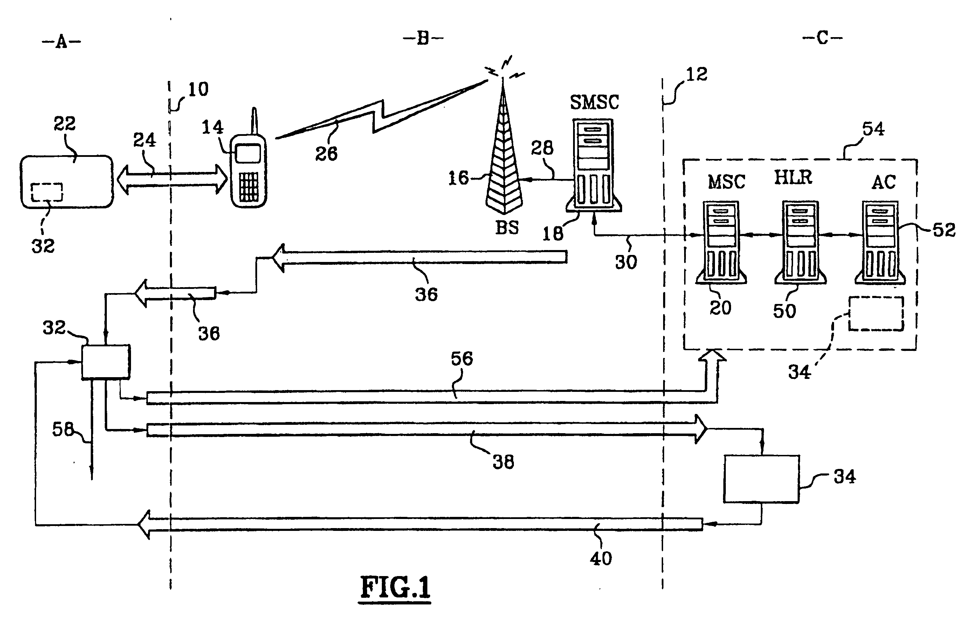

- la figure 1 est un diagramme montrant schématiquement les flux d'informations entre les différents éléments du réseau de téléphonie mobile,
- la figure 2 est un diagramme fonctionnel d'un module de gestion du risque associé à là carte à puce électronique d'un combiné mobile, et
- la figure 3 est un diagramme fonctionnel d'un module de gestion du risque associé au réseau de téléphonie mobile.

Un réseau de téléphonie mobile comprend schématiquement trois parties A, B et C qui sont délimitées verticalement par deux traits pointillés 10 et 12.

La partie centrale B correspond à la transmission bilatérale radioélectrique des communications, entre un combiné mobile 14 (ou ME) et une station de base 16 (ou BS correspondant à l'acronyme de l'expression anglo-saxonne "Base Station") associée à un équipement de messagerie 18 (ou SMSC correspondant à l'acronyme de l'expression anglo-saxonne "Short Message Service Center") qui fournit le service SMS (acronyme de l'expression anglo-saxonne "Short Message Service") défini ci-dessus dans le préambule.

La partie C correspond au réseau de téléphonie mobile 54 et comprend notamment un système de commutation 20 (ou MSC pour l'expression anglo-saxonne "Mobile Switching Center"), un module d'enregistrement des abonnés 50 (ou HLR pour l'expression anglo-saxonne "Home Location Register") et un module d'authentification 52 (ou AC pour l'expression anglo-saxonne "Authentication Center"). Le module d'enregistrement d'abonnés 50 contient les caractéristiques identifiant chacun des abonnés. Le module d'authentification 52 contient la clé secrète CS de chaque abonné, émet des nombres aléatoires NA, calcule les certificats cryptographiques CC2 et compare le certificat cryptographique CC2 au certificat cryptographique CC1 calculé par la carte SIM.

La partie A correspond aux caractéristiques de l'abonné au réseau et comprend une carte SIM 22 qui est mise en place dans le combiné mobile 14. Les informations sont échangées bilatéralement entre la carte SIM 22 et le combiné mobile 14 (flèche 24), entre le combiné mobile 14 et la station de base 16 (flèche 26), entre la station de base 16 et l'équipement de messagerie 18 (flèche 28) et entre l'équipement de messagerie 18 et le réseau 54 (flèche 30).

Pour authentifier la carte SIM et autoriser une communication, les étapes (1) à (8) du procédé décrit dans le préambule, sont exécutées à l'initiative de l'équipement mobile.

Selon l'invention, la carte SIM 22 et le réseau 54 sont complétées pour mettre en oeuvre le procédé de gestion du risque. A cet effet, la carte SIM 22 et le réseau 54 sont complétés chacun par un module dit de gestion du risque, référencé 32 pour la carte et 34 pour le serveur. ,

Le module carte 32 contient les éléments relatifs à l'abonné, tandis que le module réseau 34 contient les éléments qui sont nécessaires au réseau 54 pour interpréter les informations fournies par le module carte et prendre une décision quant à l'authentification à exécuter en fonction de certains critères.

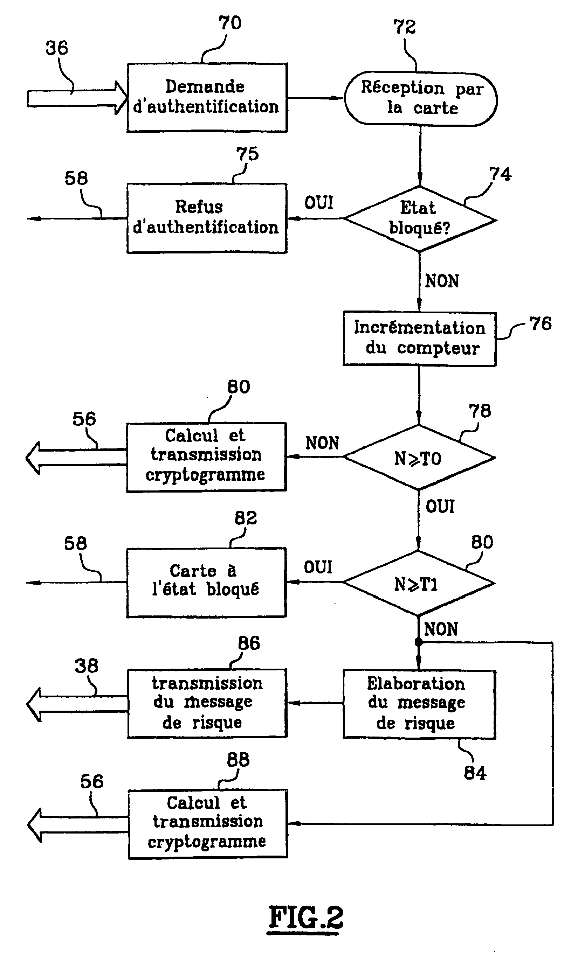

Plus précisément, la demande d'authentification 36 de la carte par le réseau 54 par l'envoi d'un nombre aléatoire NA à la carte 22 par l'intermédiaire du combiné mobile 14, déclenche les opérations du module 32 de la carte 22. Ce module analyse cette demande en fonction de critères relatifs à l'abonné et prend une décision selon les étapes du diagramme de la figure 2.

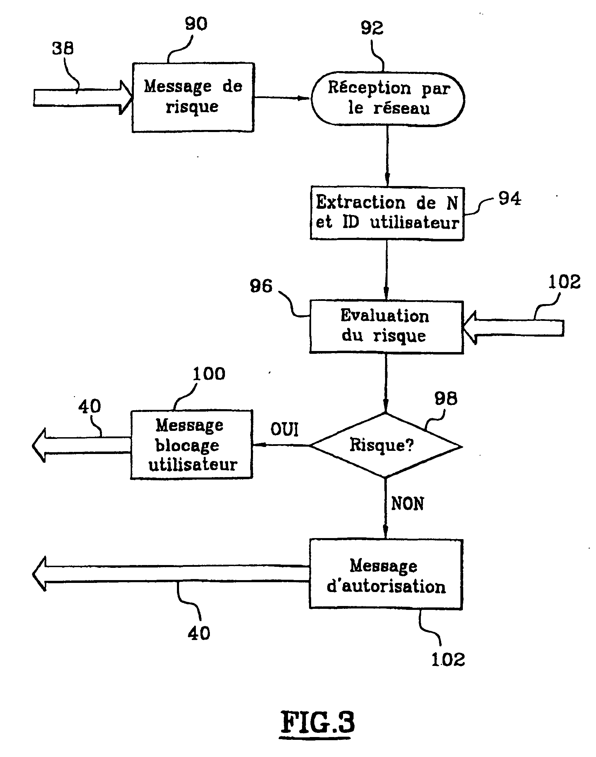

Dans le cas où le module 32 détecte un risque, un message d'évaluation du risque 38 est transmis au réseau 54 et plus particulièrement au module de gestion 34 qui prend une décision selon les étapes du diagramme de la figure 3. Cette décision ou réponse est transmise à la carte 22 par un message 40 qui a pour résultat, soit d'autoriser l'authentification de la carte selon la procédure habituelle, soit de bloquer cette authentification et plus généralement de bloquer la carte.

Sur le diagramme de la figure 2, une demande d'authentification (étape 70) de la carte par le terminal commence par la transmission à la carte d'un aléa ou nombre aléatoire NA selon la flèche 36 via le combiné ME. Cette demande d'authentification est reçue par la carte (étape 72) pour être traitée par le module de gestion du risque 32.

Ce module de gestion 32 comprend principalement :
- un registre d'état RMS pour indiquer l'état de la carte, bloqué ou non, (RMS étant l'acronyme de l'expression anglo-saxonne "Risk Management Status"),
- un compteur CAC pour compter le nombre N de demandes d'authentification (CAC étant l'acronyme de l'expression anglo-saxonne "Cumulative Authentication Counter"),
- des comparateurs pour comparer la valeur N du compteur CAC à des seuils T0 et T1 tels que T0 < T1.

Dans le cas où le registre RMS est à l'état bloqué (étape 74), l'authentification est refusée (étape 75) de sorte que le module de gestion 32 bloque la carte par un signal 58.

Dans le cas où le registre RMS n'est pas à l'état bloqué, cette demande d'authentification incrémente le compteur CAC (étape 76) d'une unité. La valeur N résultant de cette incrémentation est comparée (étape 78) au premier seuil T0.

Si cette valeur incrémentée est inférieure à T0, le module 32 calcule (étape 80) le premier certificat cryptographique CC1 (aussi appelé cryptogramme) selon l'algorithme AL à partir de la valeur aléatoire NA. Ce certificat CC1 est transmis (56) au réseau 54.

Si cette valeur incrémentée est égale ou supérieure à T0, elle est comparée au deuxième seuil T1 (étape 80). Si elle est égale ou supérieure à T1, le registre RMS est mis à l'état bloqué (étape 82) et l'authentification est refusée selon l'étape 76 de sorte que le module de gestion 32 bloque la carte par le signal 58.

Si la valeur incrémentée est inférieure à T1, le module de gestion élabore (étape 84) un message de demande d'évaluation du risque et le transmet (étape 86) au réseau 54 selon la flèche 38 pour y être traité selon le diagramme de la figure 3.

Par ailleurs, comme le deuxième seuil T1 n'est pas atteint, le blocage de la carte n'est pas envisagé, de sorte que la carte calcule le certificat cryptographique CC1 (étape 88) et le transmet (56) au réseau 54.

Le message de demande d'évaluation du risque 38 est transmis au réseau 54 selon le format SMS pour y être reçu (étapes 90 et 92). De ce message sont extraits la valeur N du compteur CAC et le numéro d'identification ID du porteur de la carte SIM.

L'évaluation du risque est effectuée par l'étape 96 en fonction de la valeur N, du porteur de la carte et d'autres paramètres spécifiques 102.

Si l'évaluation du risque est considérée comme élevée par l'étape 98, la décision est de bloquer l'usage de la carte (étape 100) en envoyant à la carte un message 40 de blocage.

Si l'évaluation n'est pas considérée comme élevée, la décision est d'autoriser l'usage de la carte (étape 102) en envoyant à la carte un message 40 d'autorisation. Ce message d'autorisation peut contenir d'autres éléments pour, par exemple, remettre à zéro le compteur CAC ou y introduire un nombre déterminé par le module 34 du réseau.

La description qui vient d'être faite de l'invention montre que la mise en place de deux modules de gestion du risque, l'un 32 dans la carte SIM et l'autre 34 dans le réseau, permet une souplesse de la gestion du risque, une partie par la carte à l'aide de paramètres simples à mettre en oeuvre (valeurs d'un compteur incrémenté et de seuils T0 et T1) et l'autre partie par le réseau en utilisant des paramètres plus sophistiqués qui peuvent être modifiés facilement.

La description ci-dessus montre qu'il est possible de définir un procédé qui comprend les étapes suivantes dans la carte à puce électronique 22 consistant à :
(a) vérifier (74) l'état bloqué ou non de la carte à puce électronique pour refuser (75) ou non la demande d'authentification ;
(b) dans le cas d'une autorisation de la demande d'authentification, compter (76) le nombre N de demandes d'authentification de la carte à puce électronique (22, SIM) par le réseau (54),
(c) comparer le nombre N de demandes d'authentification à un premier seuil T0,
(d) calculer un certificat cryptographique si N < T0 et le transmettre au réseau,
(e) comparer le nombre N à un deuxième seuil T1 si N ≥ T0,
(f) mettre la carte à puce électronique (22, SIM) à l'état bloqué (82, 58) si N ≥ T1, et
(g) calculer un certificat cryptographique (88) et élaborer un message de demande d'évaluation du risque (86) et les transmettre (38, 56) au réseau si T0 < N ≤ T1.

Les étapes ci-dessus sont complétées dans le réseau par les étapes suivantes consistant à :
(h) analyser (94) le message de demande d'évaluation du risque transmis par la carte à puce électronique (22),
(i) évaluer (96, 102, 98) le risque en fonction des résultats de l'analyse selon l'étape précédente (h) et de paramètres spécifiques, et
(j) élaborer (100, 104, 40) un message de réponse et le transmettre à la carte à puce électronique (22).

L'invention a été décrite en supposant que le certificat cryptographique est calculé à partir d'un nombre aléatoire NA mais il est clair que ce nombre aléatoire peut être remplacé par un nombre qui ne serait pas aléatoire.

Par ailleurs, l'exemple particulier qui a été décrit est relatif à la détection d'accès de caractère frauduleux par leur nombre élevé ; cependant, l'invention s'applique aussi à la détection d'autres conditions qui correspondraient à d'autres types d'accès qui constitueraient un risque pour l'opérateur du réseau tels que le dépassement d'un crédit alloué à l'utilisateur d'une carte à prépaiement. Dans ce cas, les seuils T0 et T1 seraient des valeurs monétaires tandis que le compteur serait un accumulateur des dépenses effectuées par l'utilisateur du combiné. Ainsi, T0 serait un seuil de dépenses autorisées tandis que T1 serait un seuil au-delà duquel les dépenses ne seraient plus autorisées.

## Revendications

1. Système de gestion du risque dans un réseau de téléphonie mobile équipé d'un dispositif de service de messages (18), les combinés mobiles (14) comportant chacun une carte à puce électronique (22) (SIM) capable de calculer un certificat cryptographique d'authentification à partir d'une valeur fournie par le réseau, **caractérisé :**
- **en ce que** la carte à puce électronique (22, SIM) comprend des moyens (32) pour autoriser ou non le calcul d'un certificat cryptographique et sa transmission (56) au réseau lorsque certaines conditions sont remplies ou non et pour transmettre au réseau un message (38) de demande d'évaluation du risque lorsque d'autres conditions sont remplies, et
- **en ce que** le réseau (54) comprend des moyens (34) pour évaluer ledit risque en fonction des informations contenues dans le message (38) de demande d'évaluation du risque et de paramètres spécifiques à l'utilisateur du combiné mobile (14, ME) et pour envoyer un message (40) auxdits moyens (32) de la carte à puce électronique pour autoriser ou non le calcul et la transmission du certificat cryptographique.

2. Procédé pour mettre en oeuvre le système de gestion du risque selon la revendication 1, **caractérisé en ce qu'**il comprend, dans la carte à puce électronique (22), les étapes suivantes consistant à :
(a) vérifier (74) l'état bloqué ou non de la carte à puce électronique pour refuser (75) ou non la demande d'authentification,
(b) dans le cas d'une autorisation de la demande d'authentification, compter (76) le nombre (N) de demandes d'authentification de la carte à puce électronique (22, SIM) par le réseau (54),
(c) comparer le nombre (N) de demandes d'authentification à un premier seuil T0,
(d) calculer un certificat cryptographique si N < T0 et le transmettre au réseau,
(e) comparer le nombre N à un deuxième seuil T1 si N ≥ T0,
(f) mettre la carte à puce électronique (22, SIM) à l'état bloqué (82, 58) si N ≥ T1, et
(g) calculer un certificat cryptographique (88) et élaborer un message de demande d'évaluation du risque (86) et les transmettre (38, 56) au réseau si T0 < N ≤ T1.

3. Procédé selon la revendication 2, **caractérisé en ce qu'**il comprend, en outre, les étapes suivantes mises en oeuvre par le réseau (54) consistant à :
(h) analyser (94) le message de demande d'évaluation du risque transmis par la carte à puce électronique (22),
(i) évaluer (96, 102, 98) le risque en fonction des résultats de l'analyse selon l'étape précédente (h) et de paramètres spécifiques à l'utilisateur du combiné mobile, et
(j) élaborer (100, 104, 40) un message de réponse et le transmettre à la carte à puce électronique (22).

4. Procédé selon l'une des revendications précédentes 2 ou 3, **caractérisé en ce que** les nombres N, T0 et T1 sont des valeurs monétaires correspondant respectivement à une accumulation des dépenses effectuées en communications téléphoniques, un premier seuil de dépenses autorisées et un deuxième seuil au-delà duquel les dépenses ne sont plus autorisées.

## Claims

1. A system for managing risk in a mobile telephone network equipped with a messaging service center (18), each of the mobile handsets (14) including an electronic smart card (22) (SIM) capable of computing an authentication cryptographic certificate on the basis of a value delivered by the network, said system being **characterized:**
- **in that** the electronic smart card (22, SIM) includes means (32) for authorizing or for not authorizing computation of a cryptographic certificate and transmission (56) thereof to the network when certain conditions are satisfied or are not satisfied, and for transmitting to the network a risk assessment request message (38) requesting assessment of the risk when certain other conditions are satisfied; and
- **in that** the network (54) includes means (34) for assessing said risk as a function of the information contained in the risk assessment request message (38) and of parameters specific to the user of the mobile handset (14, ME), and for sending a message (40) to said means (32) in the electronic smart card to authorize or not to authorize computation and transmission of the cryptographic certificate.

2. A method of implementing the risk management system according to claim 1, said method being **characterized in that**, in the electronic smart card (22), said method comprises the following steps consisting in:
(a) verifying (74) whether or not the electronic smart card is in the inhibited state so as to refuse (75) or to authorize the authentication request;
(b) when the authentication request is authorized, counting (76) the number (N) of authentication requests for having the electronic smart card (22, SIM) authenticated by the network (54);
(c) comparing the number (N) of authentication requests with a first threshold T0;
(d) computing a cryptographic certificate if N < T0 and transmitting it to the network;
(e) comparing the number N with a second threshold T1 if N ≥ T0;
(f) putting the electronic smart card (22, SIM) in the inhibited state (82, 58) if N ≥ T1; and
(g) computing a cryptographic certificate (88) and generating a risk assessment request message (86) and transmitting (38, 56) them to the network if T0 < N ≤ T1.

3. A method according to claim 2, **characterized in that** said method further comprises the following steps implemented by the network (54) and consisting in:
(h) analyzing (94) the risk assessment message transmitted by the electronic smart card (22);
(i) assessing (96, 102, 98) the risk as a function of the results of the analysis performed in the preceding step (h) and of parameters specific to the user of the mobile handset; and
(j) generating (100, 104, 40) an answer message and transmitting it to the electronic smart card (22).

4. A method according to claim 2 or claim 3, **characterized in that** the numbers N, T0, and T1 are monetary values corresponding respectively to an accumulation of the spending made in telephone calls, to an authorized spending first threshold, and to a second threshold beyond which spending is no longer authorized.

## Patentansprüche

1. Risikoverwaltungssystem in einem Mobiltelefonnetz ausgestattet mit einem Kurznachrichtendienst (18), wobei die Mobilgeräte (14) jeweils eine elektronische Chipkarte (22) (SIM) umfassen, die in der Lage sind, ab einem von dem Netz gelieferten Wert ein kryptographisches Authentifizierungszertifikat zu berechnen, **dadurch gekennzeichnet, dass**:
- die elektronische Chipkarte (22, SIM) Mittel (32) umfasst, um die Berechnung eines kryptographischen Zertifikats und seine Übertragung (56) an das Netz zu gestatten oder nicht, wenn bestimmte Bedingungen erfüllt sind oder nicht, und um an das Netz eine Beurteilungsanfragenachricht (38) des Risikos zu übertragen, wenn andere Bedingungen erfüllt sind, und
- das Netz (54) Mittel (34) umfasst, um das besagte Risiko entsprechend den in der der Beurteilungsanfragenachricht (38) enthaltenen Informationen und spezifischen Parametern des Benutzers des Mobilgeräts (14, ME) zu beurteilen, und um eine Nachricht (40) an die besagten Mittel (32) der elektronischen Chipkarte zu senden, um die Berechnung und die Übertragung des kryptographischen Zertifikats zu gestatten oder nicht.

2. Verfahren zur Umsetzung des oben genannten Risikoverwaltungssystems gemäß Anspruch 1, **dadurch gekennzeichnet, dass** es in der elektronischen Chipkarte (22) die folgenden Schritte umfasst:
(a) Überprüfung (74) des gesperrten Zustands oder nicht der elektronischen Chipkarte, um die Authentifizierungsanfrage abzulehnen (75) oder nicht,
(b) im Genehmigungsfall der Authentifizierungsanfrage, Zählen (76) der Anzahl (N) der Authentifizierungsanfragen der elektronischen Chipkarte (22, SIM) durch das Netz (54),
(c) Vergleichen der Anzahl (N) der Authentifizierungsanfragen mit einer ersten Schwelle T0,
(d) Berechnung eines kryptographischen Zertifikats, wenn N < T0 und Übertragung desselben an das Netz,
(e) Vergleichen der Anzahl N mit einer zweiten Schwelle T1, wenn N ≥ T0,
(f) Versetzen der elektronische Chipkarte (22, SIM) in den gesperrten Zustand (82, 58), wenn N ≥ T1, und
(g) Berechnung eines kryptographischen Zertifikats (88) und Erstellung einer Beurteilungsanfragenachricht (86) des Risikos und Übertragung (38, 56) derselben an das Netz, wenn T0 < N ≤ T1.

3. Verfahren gemäß Anspruch 1, **dadurch gekennzeichnet, dass** es die folgenden durch das Netz (54) umgesetzten Schritte umfasst:
(h) Analyse (94) der von der elektronischen Chipkarte (22) übertragenen Beurteilungsanfragenachricht des Risikos,
(i) Beurteilung (96, 102, 98) des Risikos entsprechend den Ergebnissen der Analyse des vorherigen Schritts (h) und spezifischen Parametern des Benutzers des Mobilgeräts, und
(j) Erstellung (100, 104, 40) einer Antwortnachricht und Übertragung derselben an die elektronische Chipkarte (22).

4. Verfahren gemäß einem der vorherigen Ansprüche, **dadurch gekennzeichnet, dass** die Zahlen N, T0 und T1 Geldwerte sind, die jeweils einer Summierung der für Telefongespräche verwendeten Ausgaben entsprechen, einer ersten Schwelle von zugelassen Ausgaben und einer zweiten Schwelle, über die hinausgehend keine Ausgaben mehr zugelassen sind.
